(19) Europäisches Patentamt
European Patent Office
Office européen des brevets

(11) Veröffentlichungsnummer: **0 113 438**
**B1**

(12) # EUROPÄISCHE PATENTSCHRIFT

(45) Veröffentlichungstag der Patentschrift: 08.03.89

(21) Anmeldenummer: 83112190.0

(22) Anmeldetag: 03.12.83

(51) Int. Cl.⁴: **C 08 F 230/02**, C 08 F 220/56, C 14 C 3/22, C 08 F 220/58, D 06 P 1/52, C 08 F 212/14, E 21 B 43/27, C 08 F 228/02, E 21 B 43/22 // (C08F230/02, 220:56, 220:58, 212:14, 228:02),(C08F220/56, 220:58, 230:02, 212:14, 228:02),(C08F220/58, 220:56, 230:02),(C08F212/14, 220:56, 230:02),(C08F228/02, 220:56, 230:02)

ERRATUM

| DIE TEXTSTELLE: TEXT PUBLISHED: LE PASSAGE SUIVANT: | (SEITE, SPALTE, ZEILE) (PAGE, COLUMN, LINE) (PAGE, COLONNE, LIGNE) | | LAUTET BERICHTIGT: SHOULD READ: DEVRAIT ETRE LU: |
|---|---|---|---|
| die Copolymerisation on AIBS, | 3 | 43 | die Copolymerisation von AIBS, |
| sogenannten Colpolymerisation | 5 | 32 | sogenannten Gelpolymerisation |
| Chem. 1, 169 (1947) | 5 | 35 | Chem. 1, 169 (1947)) |
| K-Wert von 148,g. | 7 | 8 | K-Wert von 148,9. |
| 3 5 10 65 11 0 11,1 | 8 | 6 | 3 5 10 65 11 9 11,1 |
| dadurch gekennnzeichnet, daß | 11 | 60 | dadurch gekennzeichnet, daß |
| einer olefinsich | 12 | 9 | einer olefinish |
| Acryl- und(oder | 12 | 32 | Acryl- und/oder |

Tag der Entscheidung über die Berichtigung / Date of decision on rectification / Date de décision portant sur modification: 28.06.89

Ausgabe- und Veröffentlichungstag / Issue and publication date / Date d'edition et de publication: 23.08.89

Patbl.Nr / EPB no / Bull. no: 89/34

(19) Europäisches Patentamt
European Patent Office
Office européen des brevets

(11) Veröffentlichungsnummer: **0 113 438**
**B1**

(12) # EUROPÄISCHE PATENTSCHRIFT

(45) Veröffentlichungstag der Patentschrift: **08.03.89**

(21) Anmeldenummer: **83112190.0**

(22) Anmeldetag: **03.12.83**

(51) Int. Cl.⁴: **C 08 F 230/02**, C 08 F 220/56, C 14 C 3/22, C 08 F 220/58, D 06 P 1/52, C 08 F 212/14, E 21 B 43/27, C 08 F 228/02, E 21 B 43/22 // (C08F230/02, 220:56, 220:58, 212:14, 228:02),(C08F220/56, 220:58, 230:02, 212:14, 228:02),(C08F220/58, 220:56, 230:02),(C08F212/14, 220:56, 230:02),(C08F228/02, 220:56, 230:02)

(54) **Wasserlösliche Copolymerisate, ihre Herstellung und ihre Verwendung.**

(30) Priorität: **09.12.82 DE 3245541**
**24.12.82 DE 3248031**

(43) Veröffentlichungstag der Anmeldung: **18.07.84 Patentblatt 84/29**

(45) Bekanntmachung des Hinweises auf die Patenterteilung: **08.03.89 Patentblatt 89/10**

(84) Benannte Vertragsstaaten:
**AT BE CH DE FR GB IT LI NL SE**

(56) Entgegenhaltungen:
**EP-A-0 023 712**
**EP-A-0 044 508**

(73) Patentinhaber: **CASSELLA Aktiengesellschaft, Hanauer Landstrasse 526, D-6000 Frankfurt am Main 61 (DE)**

(72) Erfinder: **Engelhardt, Friedrich, Dr., Hünfelder Strasse 2, D-6000 Frankfurt/Main 61 (DE)**
Erfinder: **Kühlein, Klaus, Dr., Fasanenstrasse 41, D-6233 Kelkheim (DE)**
Erfinder: **Balzer, Juliane, Steinauer Strasse 4, D-6000 Frankfurt/Main 61 (DE)**
Erfinder: **Dürsch, Walter, Dr., In der Braubach 4, D-6240 Königstein 4 (DE)**
Erfinder: **Kleiner, Hans- Jerg, Dr., Altkönigsstrasse 11a, D-6242 Kronberg 2 (DE)**

(74) Vertreter: **Urbach, Hans- Georg, Dr., Hanauer Landstrasse 526, D-6000 Frankfurt am Main 61 (DE)**

**EP 0 113 438 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

## Beschreibung

Die vorliegende Erfindung betrifft neue wasserlösliche Copolymerisate, welche in statistischer Verteilung 1 - 86 Gew.-% Reste der Formel I

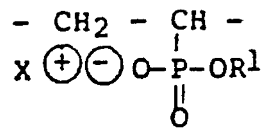

(I)

9 - 80 Gew.-% Reste der Formel II

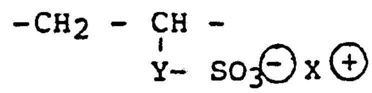

(II)

5 - 90 Gew.-% Reste der Formel III

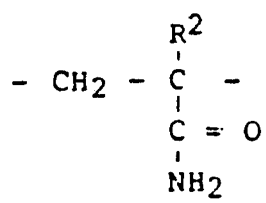

(III)

sowie gegebenenfalls 0 bis insgesamt 30 Gew.-% Reste der Formeln

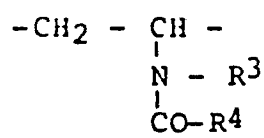

(IV) und/oder

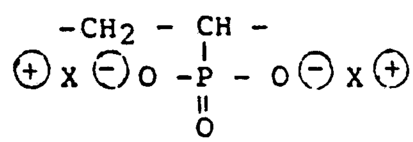

(V) und/oder

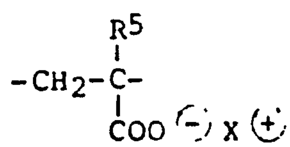

(VI)

enthalten.

In den Formeln I bis VI bedeuten

$R^1$ Alkyl mit 1 bis 4, vorzugsweise 1 oder 2, C-Atomen,

$R^2$ und $R^5$ unabhängig voneinander Wasserstoff oder Methyl; $R^3$ und $R^4$ bedeuten unabhängig voneinander Wasserstoff, Methyl oder Ethyl oder sie stehen gemeinsam für Trimethylen oder Pentamethylen, Y steht für eine direkte Bindung, Phenylen oder eine Gruppe der Formel

$-CO-NH-C(CH_3)_2-CH_2-$ und

$X^{\oplus}$ für das Proton ($H^+$) oder ein Kation.

Die Erfindung betrifft auch die Herstellung dieser neuen Copolymerisate und ihre Verwendung als Hilfsmittel in der Textilfärberei und als Nachgerbstoffe.

Das Kation $X^{\oplus}$ kann sich prinzipiell von jeder wasserlöslichen bekannten Base ableiten, deren Stärke ausreicht, die Sulfo- und Phosphonsäuregruppen der erfindungsgemäß einzusetzenden Copolymeren zu

neutralisieren und die die Wasserlöslichkeit der Copolymeren nicht beeinträchtigt. Die Auswahl kann somit in einfacher bekannter Weise erfolgen.

Zweckmäßigerweise bedeutet jedoch $X^{\oplus}$ ein Erdalkali- oder vorzugsweise ein Alkalikation, insbesondere ein Natrium- oder Kaliumkation, Ammonium oder ein von niederen aliphatischen Aminen abgeleitetes Kation. Niedere aliphatische Amine, von denen sich die Kationen $X^{\oplus}$ ableiten können, sind primär, sekundär oder tertiär und weisen gegebenenfalls durch -OH-Gruppen substituierte Alkylgruppen mit 1 bis 4 C-Atomen auf. Bevorzugt sind solche, die mindestens einen β-Hydroxyethylrest enthalten, wie z. B. β-Aminoethanol, β-Dimethylamino-ethanol, Bis-(β-hydroxyethyl)-methylamin, Tris(β-hydroxyethyl)-amin, Diethyl-β-hydroxyethylamin, Bis(β-hydroxyethyl)-ethylamin.

Bevorzugte erfindungsgemäße Copolymerisate bestehen in statistischer Verteilung zu

1 - 10 Gew.-% aus Resten der Formel I

zu 10 - 70 Gew.-% aus Resten der Formel II

zu 29 - 80 Gew.-% aus Resten der Formel III und

zu 0 - 20 Gew.-% aus Resten der Formeln IV, V und/oder VI.

Besonders bevorzugt einzusetzende Copolymerisate enthalten Reste der Formel II, in denen Y den Rest $-CO-NH-C(CH_3)_2-CH_2-$ bedeutet.

Selbstverständlich können die erfindungsgemäßen Copolymerisate im Molekül aus jeder der durch die allgemeinen Formeln I bis IV und VI definierten Baugruppen auch mehrere verschiedene Individuen, die sich in den Bedeutungen der Symbole Y oder $R^1$ bis $R^5$ unterscheiden, enthalten.

So können sie z. B. im gleichen Polymermolekül sowohl AIBS- als auch Vinylsulfonsäure-Bausteine oder ringoffene neben ringgeschlossenen Vinylamid-Bausteinen der Formel IV oder auch Vinylphosphonsäure-Ester mit verschiedenen Alkylresten $R^1$ untcrschiedlicher Kettenlänge enthalten. In der Regel enthalten die erfindungsgemäßen Copolymerisate aus den einzelnen Gruppen der allgemeinen Formeln I bis IV und VI nicht mehr als je 3, vorzugsweise nicht mehr als je 2, verschiedene Bausteine.

Die Herstellung wasserlöslicher Polymerisate, welche Sulfonsäuregruppen im Makromolekül eingebaut enthalten, ist bereits in zahlreichen Patenten sowie in der Fachliteratur ausführlich beschrieben worden. So ist z. B. die Synthese von Copolymeren der Vinylsulfonsäure mit Acrylamid und Vinylpyrrolidon im J. Polymer Sci., 38 147 (1959) veröffentlicht worden.

Im DE-C-1 101 760 ist ein Verfahren zur Herstellung wasserlöslicher Copolymerisate aus Vinylsulfonsäure und Acrylnitril bzw. Methacrylnitril gegebenenfalls im Gemisch mit weiteren ethylenisch ungesättigten Verbindungen beschrieben worden. Copolymerisate aus Vinyl- bzw. Alkylsulfonaten mit Acrylamid und Vinylamiden sind z. B. in der DE-B-2 444 108 beschriebeen worden.

Wasserlösliche Copolymerisate, welche 2-Acrylamido-2-methyl-propansulfonsäure-(3), im folgenden mit AIBS abgekürzt, als Comonomeres enthalten, sind in den US-Patentschriften 3 953 342, 3 768 565, 3 907 927, 3 926 718, sowie in den DE-A-2 502 012 und 2 547 773 beschrieben.

Die erfindungsgemäßen Copolymerisate, soweit sie Comonomere der Formel IV einpolymerisiert enthalten, bei denen $R^3$ und $R^4$ gemeinsam Trimethylen oder Pentamethylen bedeuten, lassen sich in der aus dem Stand der Technik bekannten Weise, z. B. gemäß den Angaben der US-A-3 929 741 durch Umsetzung der Monomeren bei Temperaturen von etwa 10 bis 120°C, vorzugsweise bei 40 bis 80°C, in Gegenwart von geeigneten Polymerisationskatalysatoren herstellen. Hierbei ist es nicht erforderlich, die sauren Gruppen vor der Polymerisation zu neutralisieren, und die erfindungsgemäßen Copolymerisate, in denen $X^{\oplus}$ ein Proton ist, werden direkt erhalten.

Will man unter analogen Bedingungen die Copolymerisation on AIBS, Styrol- oder Vinylsulfonsäure mit nicht ringgeschlossenen N-Vinylamiden, d. h. solchen der allgemeinen Formel

$$CH_2 = CH - \overset{R^3}{\overset{|}{N}} - COR^4$$

in denen $R^3$ und $R^4$ nicht gemeinsam Trimethylen oder Pentamethylen bedeuten, durchführen, so ist es erforderlich, die sauren Komponenten vor der Polymerisation durch Zusatz von Basen in die Salze mit dem Kation $X^{\oplus}$ zu überführen.

Die hierbei zweckmäßigerweise eingesetzten Basen sind die Hydroxyde der Kationen $X^{\oplus}$ oder deren Salze mit schwachen Säuren, wie z. B. Kohlensäure oder Phosphorsäure, oder im Falle von Aminbasen $NH_3$ oder die freien Amine.

Die Neutralisation der sauren Komponenten vor der Polymerisation ist aber auch bei der Copolymerisation von ringgeschlossenen Verbindungen möglich und in der Regel sogar vorteilhaft.

Zweckmäßigerweise werden somit zur Herstellung von 100 Gewichtsteilen des Copolymerisats 1 bis 86 Gewichtsteile Ester der Formel Ia

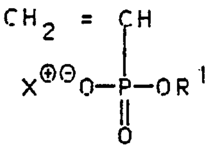

(Ia)

9 bis 80 Gewichtsteile einer olefinisch ungesättigten Sulfonsäure der Formel IIa: $CH_2 = CH - Y- SO_3H$ gegebenenfalls a Gewichtsteile Methacryl- und/oder Acrylsäure und/oder Vinylphosphonsäure in Wasser oder in einer Wasser/Alkanol-Mischung, in der auch das fertige Copolymerisat noch löslich ist, oder einem wassermischbaren organischen Lösungsmittel gelöst, für den Fall, daß $R^3$ und $R^4$ nicht gemeinsam Tri- oder Pentamethylen bedeuten, obligatorisch, für den Fall, daß $R^3$ und $R^4$ gemeinsam Tri- oder Pentamethylen bedeuten, gegebenenfalls, durch Zusatz einer Base die säuren Gruppen neutralisiert, danach b Gewichtsteile eines Vinylacylamins der Formel IVa

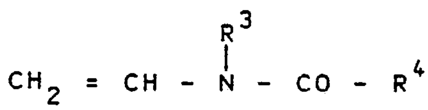

(IVa)

worin $R^3$ und $R^4$ gleich oder verschieden sind und unabhängig voneinander Wasserstoff, Methyl oder Ethyl oder gemeinsam Trimethylen oder Pentamethylen bedeuten und die Werte für a und b so gewählt werden, daß die Summe $(a + b) = 0$ bis 30 beträgt, und 5 bis 90 Gewichtsteile Acrylamid und/oder Methacrylamid zugefügt und die Copolymerisation eingeleitet und bei 10 bis 120°C durchgeführt. Sofern die Copolymerisation nach der Neutralisation durchgeführt wurde, werden erfindungsgemäße Copolymerisate, in denen $X^{\oplus}$ ein Proton ist, dadurch erhalten, daß durch Zusatz äquivalenter Mengen ausreichend starker Säuren, vorzugsweise anorgansicher Säuren, die sauren Gruppen des Copolymerisats freigesetzt werden.

Bevorzugte erfindungsgemäße Copolymerisate werden erhalten, wenn zur Herstellung von je 100 Gewichtsteilen des Copolymers 1 bis 10 Gewichtsteile des Vinylphosphonsäureesters der Formel Ia, 10 bis 70 Gewichtsteile der ungesättigten Sulfonsäure der Formel IIa, 29 bis 80 Gew.-Teile Acrylamid und/oder Methacrylamid und 0 bis 20 Gew.-Teile des Vinylacylamins der Formel IVa und/oder Vinylphosphonsäure und/oder Methacrylsäure eingesetzt werden.

Die Polymerisation kann als Lösungspolymerisation, als Fällungspolymerisation oder in umgekehrter Emulsion ausgeführt werden.

Bei der Verwendung von Wasser oder einer Wasser/Alkanol Mischung als Lösungsmittel, wobei ein mit Wasser mischbarer Alkanol mit 1 bis 4 C-Atomen eingesetzt wird und das fertige Copolymerisat in der Wasser/Alkanol-Mischung löslich ist, verläuft die Polymerisation unter den Bedingungen der Lösungspolymerisation, und es wird eine viskose wäßrige bzw. wäßrig/alkanolische Lösung des erfindungsgemäßen Copolymerisats erhalten, aus der das Produkt durch Abdestillieren des Lösungsmittels oder Ausfällung durch Mischen der Lösung mit einem wassermischbaren organischen Lösungsmittel, wie Methanol Ethanol, Aceton oder dergleichen isoliert werden kann.

Vorzugsweise wird jedoch die erhaltene wäßrige bzw.- wäßrig/alkanolische Lösung direkt, evtl. nach Einstellen einer gewünschten Konzentration, der bestimmungsgemäßen Verwendung zugeführt.

Bei der Durchführung der Copolymerisation in einem mit Wasser mischbaren organischen Lösungsmittel arbeitet man unter den Bedingungen der Fällungspolymerisation. Hierbei fällt das Polymerisat direkt in fester Form an und kann durch Abdestillieren des Lösungsmittels oder Absaugen und Trocknen isoliert werden.

Als wassermischbare organische Lösungsmittel, die zur Durchführung des erfindungsgemäßen Herstellungsverfahren geeignet sind, kommen insbesondere wasserlösliche Alkanole, nämlich solche mit 1 bis 4 C-Atomen, wie Methanol, Ethanol, Propanol, Isopropanol, n-, sec.- und iso-Butanol, vorzugsweise aber tert. Butanol in Betracht.

Der Wassergehalt der hierbei als Lösungsmittel eingesetzten niederen Alkanole sollte 6 Gew.-% nicht überschreiten, da sonst eine Klumpenbildung bei der Polymerisation auftreten kann. Vorzugsweise wird bei einem Wassergehalt von 0 - 3 Gew.-% gearbeitet.

Die Menge des einzusetzenden Lösungsmittels richtet sich bis zu einem gewissen Grad nach der Art der eingesetzten Comonomeren.

In der Regel werden pro 100 g Gesamtmonomere 200 bis 1000 g des Lösungsmittels eingesetzt.

Bei der Durchführung der Polymerisation in umgekehrter Emulsion wird die wäßrige Monomerenlösung in bekannter Weise in einem mit Wasser nicht mischbaren organischen Lösungsmittel wie Cyclohexan, Toluol, Xylol, Heptan oder hochsiedenden Benzinfraktionen unter Zusatz von 0,5 - 8 Gew.-% vorzugsweise 1 - 4 Gew.-% bekannter Emulgatoren vom W/O-Typ, emulgiert und mit üblichen radikalbildenden Initiatoren polymerisiert.

Das Prinzip der inversen Emulsionspolymerisation ist aus der U.S. Patentschrift 3 284 393 bekannt. Bei diesem Verfahren werden wasserlösliche Monomere oder Mischungen davon in der Wärme zu hochmolekularen Copolymerisaten polymerisiert, indem man zunächst die Monomeren oder wäßrige Lösungen davon, unter Zusatz von Wasser-in-Öl-Emulgatoren in einem mit Wasser nicht mischbaren, die zusammenhängende Phase bildenden organischen Lösungsmittel emulgiert und diese Emulsion in Gegenwart von radikalischen Initiatoren erwärmt. Die einzusetzenden Comonomeren können als solche in dem mit Wasser nicht mischbaren organischen Lösungsmittel emulgiert werden, oder sie können in Form einer wäßrigen Lösung, die zwischen 100 und 5 Gewichtsprozent Comonomere und 0 bis 95 Gewichtsprozent Wasser enthält, eingesetzt werden, wobei die Zusammensetzung der wäßrigen Lösung eine Frage der Löslichkeit der Comonomeren in Wasser und der vorgesehenen Polymerisationstemperatur ist. Das Verhältnis zwichen Wasser und der Monomerenphase ist in weiten Grenzen variabel und liegt in der Regel bei 70 : 30 bis 30 : 70.

Um die Monomerenphase in dem mit Wasser nicht mischbaren organischen Lösungsmittel zu einer Wasser-in-Öl-Emulsion zu emulgieren, werden den Gemischen 0,1 bis 10 Gewichtsprozent, bezogen auf die Ölphase eines Wasser-in-Öl-Emulgators, zugesetzt. Vorzugsweise werden solche Emulgatoren verwendet, die einen relativ niedrigen HLB-Wert aufweisen. Als Ölphase kann im Prinzip jede inerte wasserunlösliche Flüssigkeit, d. h. im Prinzip jedes hydrophobe organische Lösungsmittel, eingesetzt werden. Im allgemeinen verwendet man im Rahmen der vorliegenden Erfindung Kohlenwasserstoffe, deren Siedepunkt im Bereich von 120 bis 350°C liegt. Diese Kohlenwasserstoffe können gesättigte, lineare oder verzweigte Paraffin-Kohlenwasserstoffe, wie sie in Erdölfraktionen vorwiegend vorliegen, sein, wobei diese auch die üblichen Anteile von Naphthenkohlenwasserstoffen enthalten können. Es können aber auch aromatische Kohlenwasserstoffe, wie beispielsweise Toluol oder Xylol, sowie die Gemische der oben genannten Kohlenwasserstoffe als Ölphase eingesetzt werden. Vorzugsweise verwendet man ein Gemisch aus gesättigten Normal- und Iso-Paraffinkohlenwasserstoffen, das bis zu 20 Gewichtsprozent Naphthene enthält.

Eine detailliertere Beschreibung des Verfahrens findet sich beispielsweise in der deutschen Patentschrift 1 089 173 und in den US-Patentschriften 3 284 393 und 3 624 019.

Copolymerisate mit besonders hohem Polymerisationsgrad werden erhalten, wenn man die Polymerisation in wäßriger Lösung nach dem Verfahren der sogenannten Colpolymerisation durchgeführt. Dabei werden 15 - 60 %-ige wäßrige Lösungen der Comonomeren mit bekannten geeigneten Katalysatorsystemen ohne mechanische Durchmischung unter Ausnutzung des Trommsdorff-Norrish-Effekts (Bios Final Rep. 363,22; Makromol. Chem. 1, 169 (1947) polymerisiert. Aus den Viskositäten wäßriger Lösungen der in dieser Weise hergestellten erfindungsgemäßen und erfindungsgemäß einzusetzenden wasserlöslichen Copolymerisate lassen sich unter Zugrundelegung der üblichen Modellvorstellungen über den Zusammenhang von Viskosität und mittlerem Molekulargewicht polymerer Substanzen, sowie unter Berücksichtigung von Vergleichswerten ähnlich gebauter Polymerer für die erfindungsgemäßen Produkte mittlere Molekulargewichte in der Größenordnung von $10^6$ abschätzen.

Die Polymerisationsreaktion wird im Temperaturbereich zwischen -20° und 150°C, bevorzugt zwischen 5 und 90°C, durchgeführt, wobei sowohl unter Normaldruck als auch unter erhöhtem Druck gearbeitet werden kann. In der Regel wird die Polymerisation in einer Schutzgasatmosphäre, vorzugsweise unter Stickstoff, ausgeführt.

Zur Auslösung der Polymerisation können energiereiche elektromagnetische Strahlen oder die üblichen chemischen Polymerisationsinitiatoren herangezogen werden, z. B. organische Peroxide, wie Benzoylperoxide, tert. Butyl-hydroperoxid, Methylethyl-keton-peroxid, Cumol-hydroperoxid, Azoverbindungen wie Azo-di-isobutyro-nitril oder 2'-Azo-bis-(2-amidinopropan)-dihydrochlorid

$$HN{=}\underset{NH_2}{\underset{|}{C}}-C(CH_3)_2-N{=}N-C(CH_3)_2-\underset{NH_2}{\underset{|}{C}}{=}NH \cdot 2\ HCl$$

sowie anorganische Peroxiverbindungen wie $(NH_4)_2S_2O_8$ oder $K_2S_2O_8$ oder $H_2O_2$ gegebenenfalls in Kombination mit Reduktionsmitteln wie Natriumhydrogensulfit und Eisen-II-Sulfat oder Redoxsysteme, welche als reduzierende Komponente eine aliphatische und aromatische Sulfinsäure, wie Benzolsulfinsäure und Toluolsulfinsäure oder Derivate dieser Säuren, enthalten, wie z. B. Mannichaddukte aus Sulfinsäure, Aldehyden und Amino-verbindungen, wie sie in der deutschen Patentschrift 1 301 566 beschrieben sind. Pro 100 g Gesamtmonomeren werden in der Regel 0,03 bis 2 g des Polymerisationsinitiators eingesetzt.

Durch mehrstündiges Nachheizen der nach dem Verfahren der Gelpolymerisation erhaltenen Polymerisatgele im Temperaturbereich von 50 - 130°C, vorzugsweise 70 - 100°C können die Qualitätseigenschaften der Polymerisate noch verbessert werden.

Die auf diesem Wege hergestellten, in Form wäßriger Gallerten vorliegenden erfindungsgemäßen Copolymerisate können nach mechanischer Zerkleinerung mit geeigneten Apparaten direkt in Wasser gelöst werden und zum Einsatz gelangen. Sie können aber auch nach Entfernung des Wassers durch bekannte Trocknungsprozesse in fester Form erhalten und erst bei ihrer Verwendung wieder in Wasser aufgelöst werden.

Die erfindungsgemäßen Copolymerisate lassen sich mit mehrwertigen Metallkationen, insbesondere solchen der dritten bis achten Gruppe, sowie der zweiten Nebengruppe des periodischen Systems der Elemente in an sich bekannter Weise zu Chelaten umsetzen. Selbst die Metalle der zweiten Hauptgruppe zeigen noch eine deutliche Chelatisierungswirkung. Die Chelatisierungsreaktion tritt je nach der Art des Kations im neutralen oder alkalischen pH-Bereich oder bei sehr aktiven Kationen (wie z. B. bei Titan oder Zirkon) bereits im stark sauren Bereich ein. Sie verläuft bereits bei Zimmertemperatur mit hoher Geschwindigkeit und ist in den meisten Fällen wie z. B. bei Ti, Zr, Fe, Cr oder Al nach wenigen Sekunden bis Minuten, in Selteneren Fällen nach einigen Minuten bis Stunden (wie z. B. bei Cu, Co, Zn oder Cd) vollständig abgeschlossen.

Dies Chelatisierungsvermögen der oben definierten Polymerisate kann einerseits dazu ausgenutzt werden, die betreffenden Kationen fest zu binden und zu maskieren, um sie zu eliminieren oder unwirksam zu machen. Andererseits weisen die Metallchelate der Polymeren selbst höchst wertvolle technische Eigenschaften auf. Besonders auffällig ist die extrem hohe Viskosität schon sehr verdünnter wäßriger Lösungen der chelatisierten Copolymerisate.

Die neuen erfindungsgemäßen Copolymerisate und ihre Chelate eignen sich vorteilhaft als Färbereihilfsmittel, insbesondere beim Färben von cellulosehaltigen Fasermaterialien nach dem Klotz-Kaltverweil-Verfahren. Durch den Zusatz der erfindungsgemäßen Copolymerisate wird die Flottenaufnahme des zu färbenden cellulosehaltigen Textilmaterials wesentlich erhöht, was zu einer besseren Durchfärbung selbst voluminöser textiler Flächengebilde, wie z. B. Trikot, führt. Dadurch resultieren Färbungen von hoher Egalität und hervorragendem Warenbild.

Beim Einsatz der erfindungsgemäßen neuen Copolymerisate in der Pigmentfärberei werden Färbungen hoher Egalität und Farbtiefe erhalten.

Die neuen erfindungsgemäßen Copolymerisate bewirken beim Zusatz zu Dispersionsfarbstoffe enthaltenen Klotzflotten, wie sie zum Färben von Polyestermaterialien verwendet werden, unabhängig von deren pH-Wert eine hervorragende Egalität und Brillanz der damit fertiggestellten Färbungen.

Des weiteren sind erfindungsgemäße Copolymerisate mit Molekulargewichten von weniger als 50 000 in vorteilhafter Weise als sogenannter Nachgerbstoff, insbesondere für Chromleder, geeignet. Die erfindungsgemäßen Copolymeren, gegebenenfalls in Form ihrer Metallchelate, sind auch als Verdicker für wäßrige Säuren und als Hilfsmittel auf dem Erdölgebiet in der sekundären und tertiären Öl- und Gasförderung geeignet. Hierbei werden in an sich bekannter Weise zur Steigerung der Förderrate verdickte wäßrige Förderfluids, insbesondere wäßrige Säuren, durch Hilfsbohrungen unter hohem Druck in die Erdöl führende Formation eingepreßt.

Die folgenden Ausführungsbeispiele zeigen die Herstellung erfindungsgemäßer Polymerisate. Alle %-Angaben beziehen sich auf Gewichtsmengen.

Das mittlere Molekulargewicht der erfindungsgemäßen Copolymerisate kann aufgrund von Viskositätsdaten berechnet werden unter Annahme der üblichen Modellvorstellungen über die Abhängigkeit der Viskositäten polymerer Substanzen von ihrem Molekulargewicht und unter Berücksichtigung von Vergleichswerten ähnlich strukturierter Polymerer.

Die Viskositätsdaten, die diesen Berechnungen zugrunde liegen, wurden in 0,05 gew. %-igen Lösungen der Copolymere in 20 gew. %iger Salzsäure bei 20°C bestimmt unter Benutzung eines Brookfield Viskosimeters und bei einem Schergefälle von 7,5 $sec.^{-1}$.

Die in den Ausführungs- und Tabellenbeispielen benutzten Abkurzungen haben folgende Bedeutung:

| | |
|---|---|
| A:M | Acrylamid |
| VIMA: | N-Vinyl-N-methyl-acetamid |
| VIPY: | N-Vinylpyrrolidon |
| AIBS: | 2-Acrylamido-2-methyl-propansulfonsäure |
| VA: | Vinylacetamid |
| VIFA: | Vinylformamid |
| VSS-Na: | Natriumvinylsulfonat |
| Styrol SS: | Styrolsulfonsäure |
| VPS: | Vinylphosphonsäure |
| VPE: | Vinylphosphonsäure-methylester |
| AS: | Acrylsäure |
| MAS: | Methacrylsäure |

**Beispiel 1**

(Emulsionspolymerisation)

7,2 g R®Arkopal N 100 (Nichtionischer Emulgator auf der Basis eines oxethylierten Phenolderivats) und 19,4 g ®Span 80 (Nichtionischer Emulgator auf Basis eines Zuckeralkohol-Stearats) werden in ®Isopar M (Technisches Gemisch von Isoparaffin mit einem Siedepunkt von ca. 200 - 240°C) aufgelöst und die resultierende Lösung in ein 1-Liter-Reaktionsgefäß eingeschüttet, das mit einem Rührer, Thermometer und einem Stickstoffeinlaß versehen ist. Dann wird eine Monomerlösung durch Auflösung von 97,2 g Acrylamid, 9,7 g AIBS und 1,1 g

Vinylphosphonsäuremonomethylester (VPE) in 105 ml Wasser hergestellt. Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 148,g.

Durch Ansäuern der wäßrigen Lösung auf pH 2 können die sauren Gruppen des erhaltenen Copolymerisats freigesetzt werden.

**Beispiel 2**

(Lösungspolymerisation)

In einem Polymerisationskolben von 1 Liter Inhalt, ausgestattet mit Planschliffdeckel, Rührer, Thermometer und Gaseinleitungsrohr werden in 200 g Wasser 70 g AIBS gelöst und mit Ammoniak (25 %-ig) neutralisiert. Dann werden 10 g Acrylamid und 10 g VPE zugesetzt. Der pH-Wert wird auf 8,5 g eingestellt und 10 g N-Vinyl-N-methyl-acetamid zugefügt. Unter Rühren und Einleiten von Stickstoff wird das Reaktionsgemisch auf 60°C erhitzt. Nun gibt man noch 1 g einer wässrigen 10 %-igen Dibutylamin-HCl-Lösung und 0,1 g Ammoniumpersulfat zu. Die Reaktion dauert etwa 30 Minuten wobei die Temperatur auf 70°C ansteigt. Das Reaktionsgemisch wird viskos. Es wird unter Rühren noch 2 Std. bei 80°C nachgeheizt. Man erhält eine klare, hochviskose Lösung. Der K-Wert beträgt 166,7.

Eine Lösung, die direkt als Klotzhilfsmittel für Dispersionsfarbstoff-Klotzflotten eingesetzt werden kann, wird erhalten, wenn man den pH-Wert der hergestellten hochviskosen Polymerisatlösung durch Zusatz von Salzsäure auf 7 abstumpft und anschließend mit 30 %-iger Essigsäure auf 4,5 einstellt.

**Beispiel 3**

(Gelpolymerisation)

In einem Polymerisationskolben von 1 l Inhalt, ausgestattet mit Planschliffdeckel, Rührer, Thermometer und Gaseinleitungsrohr wird durch Auflösung von 60 g Acrylamid, 30 g AIBS und 10 g VPE in 250 g Wasser eine Monomerlösung hergestellt. Der pH-Wert wird mit Ammoniak (25 %-ig) auf 8,5 eingestellt. Unter Rühren und Einleiten von Stickstoff werden nun 1 g einer wässrigen 10 %-igen Dibutylamin-HCl-Lösung und 0,1 g Ammoniumpersulfat zugegeben. Man läßt unter Stickstoff-Einleitung noch 3 Min. bei erhöhter Drehzahl rühren. Die Stickstoff-Einleitung wird beendet, Einleitungsrohr und Rührer werden hochgezogen. Nach einer Induktionszeit von 30 Min. setzt die Polymerisation ein, wobei die Temperatur von 20°C auf 78°C ansteigt und die Lösung in ein formstabiles Gel übergeht. Der K-Wert beträgt 218,8.

**Beispiel 4**

(Fällungspolymerisation)

In einem Polymerisationkolben von 1 l Inhalt, ausgestattet mit Rührer, Rückflußkühler, Thermometer, Tropftrichter und Gaseinleitungsrohr werden in 440 ml tert.-Butanol 49,7 g Acrylamid, 7,1 g AIBS, 10,7 g VPE und 3,6 g Methacrylsäure (MAS) gelöst. Unter Rühren und Einleiten von Stickstoff wird die Monomerlösung auf 50°C angeheizt und 1 g Azoisobutyronitril, gelöst in 5 ml DMF, zugetropf. Nach einer Induktionszeit von 30 Min. setzt die Polymerisation ein, die Reaktionstemperatur steigt auf 68°C und das Polymerisat fällt aus. Es wird noch 2 Std. bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers, das sich gut in Wasser löst und einen K-Wert von 115,0 hat.

Gemäß dieser vier Verfahrensweisen können auch die Copolimerisate der folgenden Tabelle hergestellt werden.

**Tabelle**

| Nr. | AM | AIBS | VPS | VPE | AS | MAS | VIFA | VIMA | VIPY | VSS-Na | Styrol SS | VA | K-Wert |
|---|---|---|---|---|---|---|---|---|---|---|---|---|---|
| 1 | 5 | 15 | | 80 | | | | | | | | | 16,5 |
| 2 | 5 | 15 | 5 | 75 | | | | | | | | | 14,4 |
| 3 | 5 | | 10 | 65 | | | | 11 | | | 0 | | 11,1 |
| 4 | 20 | 10 | | 40 | | | 20 | | | 10 | | | 64,4 |
| 5 | 50 | 15 | | 5 | 5 | | | | 25 | | | | 70,3 |
| 6 | 80 | 15 | | 5 | | | | | | | | | 148,9 |
| 7 | 85 | 10 | 2 | 3 | | | | | | | | | 143,3 |
| 8 | 75 | 12 | | 10 | | | | | | | 3 | | 159,3 |
| 9 | 70 | 5 | | 15 | 5 | | | | | 5 | | | 115,0 |
| 10 | 70 | 20 | 5 | 5 | | 5 | | | | | | | 143,0 |
| 11 | 60 | 20 | | 15 | | | 5 | | | | | | 29,3 |
| 12 | 65 | 10 | 10 | 10 | | | | | | | | 5 | 113,2 |
| 13 | 10 | 80 | | 10 | | | | | | | | | 212,8 |
| 14 | 10 | 60 | | 10 | | | | 10 | | | | 10 | 160,0 |
| 15 | 30 | 50 | | 10 | | | | | 10 | | | | 194,8 |
| 16 | 40 | 40 | 5 | 10 | | | 5 | | | | | | 218,8 |
| 17 | 50 | 30 | 5 | 5 | 5 | 5 | | | | | | | 108,6 |
| 18 | 50 | 9 | 5 | 11 | 15 | 5 | | | 5 | | | | 58,4 |
| 19 | 45 | | 5 | 40 | | | | | | 8 | 2 | | 76,8 |
| 20 | 45 | 10 | 5 | 15 | | | | 20 | | 5 | | | 120,4 |
| 21 | 25 | | | 5 | | | | | | 70 | | | 61,3 |
| 22 | 5 | 9 | | 86 | | | | | | | | | 10,7 |
| 23 | 50 | 9 | 30 | 11 | | | | | | | | | 67,6 |
| 24 | 40 | 19 | | 11 | | | | 30 | | | | | 148,3 |
| 25 | 50 | 10 | | 10 | | 30 | | | | | | | 136,4 |
| 26 | 50 | | 15 | 20 | 15 | | | | | | | | 98,5 |
| 27 | 30 | 15 | | 10 | | | 10 | 10 | 10 | 15 | | | 47,4 |
| 28 | 25 | 20 | 10 | 25 | | | 10 | | | | | 10 | 112,2 |
| 29 | 30 | 20 | | 20 | | | 5 | | | | | 25 | 132,2 |
| 30 | 70 | | | 30 | | | | | | | | | 164,0 |
| 31 | 50 | 30 | 10 | 10 | | | | | | | | | 137,0 |
| 32 | 60 | 30 | | 10 | | | | | | | | | 148,0 |

**Beispiel 5**

a) Ein Mischgewebe aus Polyester- und Zellwollfasern in einem Mischungsverhältnis 70 : 30 wird bei einer Flottenaufnahme von 60 %, bezogen auf das Trockengewicht, mit einer Flotte geklotzt, die im Liter Wasser.

50 g des Dispersionsfarbstoffes C.I. Disperse Orange 13

in handelsüblicher Form Beschaffenheit sowie

15 ml einer 4 gew %-igen Lösung eines Copolymerisats der Zusammensetzung gemäß Tabellenbeispiel 7, hergestellt nach Ausführungsbeispiel 2,

enthält und die durch Zusatz von 20 %-iger Essigsäure auf einen pH-Wert von 5,5 eingestellt wurde.

Das so geklotzte Gewebe wird bei einer Temperatur von 130° C getrocknet und daran anschließend bei einer Temperatur von 210° C während 60 Sekunden thermosoliert.

Danach wird die Färbung durch kochendes Seifen nachbehandelt. Man erhält auf dem Polyesteranteil des Gewebes eine Orangefärbung von höchster Brillanz und hervorragender Egalität.

b) Das im Absatz a) eingesetzte erfindungsgemäße Copolymerisat wurde wie folgt hergestellt:

In einem Polymerisationskolben von 1 Liter Inhalt, ausgestattet mit Planschliffdeckel, Rührer, Thermometer und Gaseinleitungsrohr werden in 200 g Wasser, 10 g AIBS und 2 g VPS gelöst und mit Ammoniak (25 %-ig) neutralisiert. Dann werden 85 g Acrylamid und 3 g VPE zugesetzt. Der pH-Wert wird auf 8,5 eingestellt, und dann wird unter Rühren und Einleiten von Stickstoff das Reaktionsgemisch auf 60° C erhitzt. Nun gibt man noch 1 g einer wässrigen 10 %-igen Dibutylamin-HCl-Lösung und 0,1 g Ammoniumpersulfat zu. Die Reaktion dauert etwa 30 Minuten, wobei die Temperatur auf 70° C ansteigt. Das Reaktionsgemisch wird viskos. Es wird unter Rühren noch 2 Std. bei 80° C nachgeheizt. Man erhält eine klare, hochviskose Lösung. Der K-Wert beträgt 166,7.

Eine Lösung, die direkt als Klotzhilfsmittel für Dispersionsfarbstoff-Klotzflotten eingesetzt werden kann, wird erhalten, wenn man den pH-Wert der hergestellten hochviskosen Polymerisatlösung durch Zusatz von Salzsäure auf 7 abstumpft und anscheließend mit 30 %-iger Essigsäure auf 4,5 einstellt.

**Beispiel 6**

Ein Baumwollfrottee wird geklotzt mit einer Farbflotte, die pro Liter 40 g der Handelsform des Farbstoffs ®Remazol gelb FG, 30 g Natriumsulfat, 20 g Natronlauge (32,5 gew.%-ige) und 20 ml einer 4 gew.%-igen Lösung des gemäß Beispiel 5 b) hergestellten Copolymerisats enthält.

Das geklotzte Material wird auf eine Flottenaufnahme von 90 % abgequetscht und aufgewickelt. Unter langsamem Drehen des Wickels läßt man die Ware 20 Stunden verweilen. Anschließend wird das gefärbte Material wie üblich geseift, heiß und kalt gespült und getrocknet. Man erhält eine volle, brilliante Gelbfärbung mit vorzüglicher Egalität und Durchfärbung.

In analoger Weise wie in den Beispielen 5 und 6 lassen sich auch andere der in den Beispielen 1 bis 4 und den Tabellen angegebenen Copolymerisate zur Verbesserung der Egalität und der Durchfärbung von Textilfärbung einsetzen.

**Beispiel 7**

a) 100 Teile eines auf übliche Art und Weise neutralisierten chromgegerbten Kalbsleders werden mit einer Lösung aus 200 Teilen Wasser und 5 Teilen, berechnet auf Trockensubstanz, des Polymerisats Tabellenbeispiel 8, hergestellt analog Ausführungsbeispiel 4, während 1 1/2 Stunden bei 30°C nachbehandelt. Nach kurzem Spülen wird das nachbehandelte Leder wie üblich mit 4 bis 6 Teilen eines lichtechten Fettungsmittels auf der Basis von sulfoniertem Spermöl gefettet und anschließend getrocknet.

Man erhält ein Leder von heller Farbe, ausgezeichneter Lichtechtheit, mit einem weichen vollen Griff und mit einem feinen Narbenbild.

b) Das in Abschnitt a) eingesetzte Copolymerisat wird wie folgt erhalten:

In einem Polymerisationskolben von 1 l Inhalt, ausgestattet mit Rührer, Rückflußkühler, Thermometer, Tropftrichter und Gaseinleitungsrohr werden in 440 ml tert.-Butanol 52,8 g Acrylamid, 8,5 g AIBS, 7,1 g VPE und 2,1 g Styrolsulfonsäure (Styrol-SS) gelöst. Unter Rühren und Einleiten von Stickstoff wird die Monomerlösung auf 50°C angeheizt und 1 g Azoisobutyronitril, gelöst in 5 ml DMF, zugetropft. Nach einer Induktionszeit von 30 Min. setzt die Polymerisation ein, die Reaktionstemperatur steigt auf 68°C, und das Polymerisat fällt aus. Es wird noch 2 Stunden bei 80°C nachgeheizt. Das Copolymerisat kann durch Absaugen und Trocknen isoliert werden. Es kann jedoch auch das Lösungsmittel direkt unter vermindertem Druck abdestilliert werden. Man erhält das Polymere in Form eines weißen leichten Pulvers, das sich gut in Wasser löst und einen K-Wert von 45 hat.

**Beispiel 8**

a) 100 Teile chromgegerbtes Schafsleder werden mit 200 Teilen Wasser von 40°C versetzt. Hierauf werden zur Flotte 10 Teile, berechnet auf Trockensubstanz, eines Polymeren gemäß Tabellenbeispiel 2, hergestellt analog Ausführungsbeispiel 1, hinzugefügt und während 2 Stunden bei 40°C auf das Leder einwirken gelassen. Nach dem Spülen wird das behandelte Leder mit ca. 5 Teilen eines üblichen Fettungsmittels gefettet und anschließend getrocknet. Man erhält ein volles, geschmeidiges Leder mit einem geschlossenen, fest haftenden Narben.

b) 7,2 g ®Arkopal N 100 (Nichtionischer Emulgator auf der Basis eines oxethylierten Phenolderivats) und 19,4 g ®Span 80 (Nichtionischer Emulgator auf Basis eines Zuckeralkohol-Stearats) werden in ®Isopar M (Technisches Gemisch von Isoparaffin mit einem Siedepunkt von ca. 200 - 240°C) aufgelöst und die resultierende Lösung in ein 1-Liter-Reaktionsgefäß eingeschüttet, das mit einem Rührer, Thermometer und einem Stickstoffeinlaß versehen ist. Dann wird eine Monomerlösung durch Auflösung von 5,4 g Acrylamid, 16,2 g AIBS; 5,4 g VPS und 81 g Vinylphosphonsäuremonomethylester (VPE) in 105 ml Wasser hergestellt. Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 0,0275 g Ammoniumpersulfat in 3 ml Wasser dem Gemisch zugefügt und damit die Polymerisation gestartet. Die Reaktion dauert 1 1/2 Stunden, die Reaktionstemperatur wird zwischen 30 und 40°C gehaltten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 14,4.

**Beispiel 9**

a) Eine Erdgasbohrung in West Texas wird für die Drucksäuerung ausgewählt. Die Bohrung hat ein Produktionsintervall zwischen einer Tiefe von 2940 bis 2970 Meter. Die Sohlen-Temperatur in diesem Intervall

beträgt 76 bis 77°C. Die Durchlässigkeit der Formation beträgt durchschnittlich 0,1 md (millidarcy). Die spontane Produktivität der Bohrung beträgt vor der Behandlung ca. 112 $m^3$ Gas und ca. 790 l Kondensat pro Tag.

Das einzusetzende Drucksäuerungsfluid wird hergestellt, indem man 151400 Liter 15 %-ige Salzsäure, die 302 l (0,2 Gew.-%) eines handelsüblichen Korrosionsinhibitors enthält, mit 1726 kg einer Wasser in Öl Emulsion eines Copolymers aus 20 Gew.-% Acrylamid, 25 Gew.-% AIBS, 40 Gew.-% VPE, 10 Gew-% Vinylphosphonsäure und 5 Gew.-% VIPY versetzt, die einen Polymergehalt von 32 Gew.-% hat. Zusätzlich werden der Mischung 3002 1 (0,2 Gew.-%) eines nichtionischen fluorhaltigen Netzmittels zugesetzt. Die Mischung wird eine Stunde in zwei Tanks gelagert und stellt dann eine homogene Flüssigkeit mit einer Viskosität von etwa 37 cps dar, gemessen bei einem Scher-Gefälle von 511 $sec.^{-1}$ in einem Fann-35 Viskosimeter. Dieses Behandlungsfluid wird in die oben bezeichnete Tiefbohrung eingepumpt, wobei gleichzeitig pro 250 l der Behandlungsflüssigkeit 550 ml einer 10 gew.%-igen Zirkontetrachlorid-Lösung in 15 %-iger Salzsäure eindosiert werden. Die Injektionsgeschwindigkeit des Behandlungsfluids beträgt etwa 1950 l pro Minute bei einem an der Oberfläche gemessenen Behandlungsdruck von 420 bar. Nach etwa 75 bis 80 Minuten ist die gesamte Behandlungsflüssigkeit in das Bohrloch eingepreßt, und dieses wird für 6 Stunden verschlossen, um der Säure Gelegenheit zu geben, mit dem Gestein zu reagieren. Nach dieser Zeit wird der Druck am Kopf der Bohrung entlastet und die Förderung wiederhergestellt. Eine Messung der Förderrate ergibt eine wesentliche Zunahme der Produktivität der Bohrung.

b) Das im Abschnitt a) eingesetzte Copolymerisat wurde wie folgt hergestellt:

43,2 kg ®Arkopal N 100 (Nichtionischer Emulgator auf der Basis eines oxethylierten Phenolderivats) und 116,4 kg ®Span 80 (Nichtionischer Emulgator auf Basis eines Zuckeralkohol-Stearats) werden in 600 kg ®Isopar M (Technisches Gemisch von Isoparaffin mit einem Siedepunkt von ca 200 - 240°C) aufgelöst und die resultierende Lösung in ein 1 Liter Reaktionsgefäß eingeschüttet, das mit einem Rührer, Thermometer und einem Stickstoffeinlaß versehen ist. Dann wird eine Monomerlösung durch Auflösung von 129,7 kg Acrylamid, 259,4 kg Vinylphosphonsäuremethylester, 162,1 kg AIBS, 65,0 kg Vinylphosphonsäure (VPS) und 32,5 kg VIPY in 630 l Wasser hergestellt.

Der pH-Wert der Monomerlösung wird auf 8,5 mit Ammoniak (25 %-ig) eingestellt. Unter schnellem Rühren wird die wässrige Monomerlösung der organischen Phase zugefügt. Das Reaktionsgefäß wird evakuiert und anschließend mit Stickstoff gefüllt. Nun wird die Lösung von 165 g Ammoniumpersulfat in 18 l Wasser dem Gemisch zugefügt und damit die Polymerisation gestartet. Die Reaktion dauert 1 1/2 Stunden, die Reaktionstemperatur wird zwischen 30 und 40°C gehalten. Es resultiert eine stabile Emulsion, die unter Verwendung handelsüblicher oberflächenaktiver Mittel in an sich bekannter Weise in Wasser invertiert werden kann. Die resultierende Polymerlösung hat einen K-Wert von 140,1.

## Patentansprüche

1. Wasserlösliche Copolymerisate, welche in statistischer Verteilung

1 - 86 Gew.-% Reste der Formel I

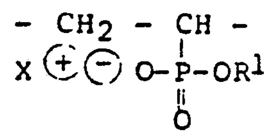

(I)

9 - 80 Gew.-% Reste der Formel II

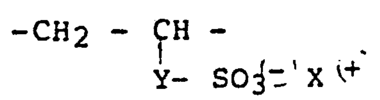

(II)

5 - 90 Gew.-% Reste der Formel III

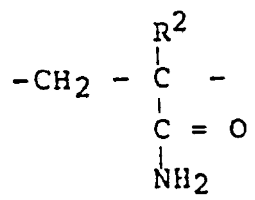

(III)

sowie gegebenenfalls
0 bis insgesamt 30 Gew.-% Reste der Formeln

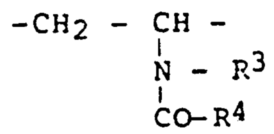

(IV) und/oder

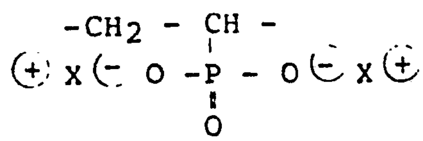

(V) und/oder

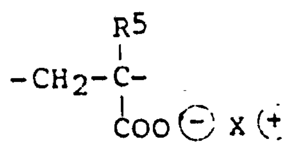

(VI)

enthalten, wobei in den Formeln I bis VI
$R^1$ Alkyl mit 1 bis 4 C-Atomen
$R^2$ und $R^5$ unabhängig voneinander Wasserstoff oder Methyl,
$R^3$ und $R^4$ unabhängig voneinander Wasserstoff, Methyl oder Ethyl oder gemeinsam Trimethylen oder Pentamethylen bedeuten und
Y für eine direkte Bindung, Phenylen oder einer Gruppe der Formel

$-CO-NH-C(CH_3)_2-CH_2-$ und

$X^{\oplus}$ für das Proton ($H^+$) oder ein Kation stehen.

2. Wasserlösliche Copolymerisate gemäß Anspruch 1, dadurch gekennzeichnet, daß sie in statistischer Verteilung zu 1 - 10 Gew.-% aus Resten der Formel I
zu 10 - 70 Gew.-% aus Resten der Formel II
zu 29 - 80 Gew.-% aus Resten der Formel III und
zu 0 - 20 Gew.-% aus Resten der Formeln IV, V und/oder VI bestehen.

3. Wasserlösliche Copolymerisate gemäß den Ansprüchen 1 und 2, dadurch gekennzeichnet, daß in den darin enthaltenen Resten der Formel II
Y ein Brückenglied der Formel

$-CO-NH-C(CH_3)_2-CH_2$ ist.

4. Wasserlösliche Copolymerisate gemäß den Ansprüchen 1 bis 3, dadurch gekennzeichnet, daß $X^+$ ein Erdalkali- oder ein Alkalikation, Ammonium oder ein von niederen primären, sekundären oder tertiären aliphatischen Aminen, deren Alkylgruppen mit 1 bis 4 C-Atomen, gegebenenfalls durch -OH-Gruppen substituiert sein können, abgeleitetes Kation ist.

5. Verfahren zur Herstellung wasserlöslicher Copolymerisate der im Anspruch 1 angegebenen Zusammensetzung, dadurch gekennnzeichnet, daß man zur Herstellung von je 100 Gewichtsteilen des Copolymerisats 1 bis 86 Gewichtsteile Ester der Formel Ia

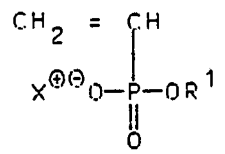

(Ia)

9 bis 80 Gewichtsteile einer olefinsich ungesättigten Sulfonsäure der Formel IIa

$CH_2 = CH - Y - SO_3H$ (IIa)

gegebenenfalls a Gewichtsteile Methacryl- und/oder Acrylsäure und/oder Vinylphosphonsäure in Wasser oder in einer Wasser/Alkohol-Mischung, in der auch das fertige Copolymerisat noch löslich ist, oder einem wassermischbaren organischen Lösungsmittel löst, für den Fall, daß $R^3$ und $R^4$ nicht gemeinsam Tri- oder Pentamethylen bedeuten, obligatorisch, für den Fall, daß $R^3$ und $R^4$ gemeinsam Tri- oder Pentamethylen bedeuten, gegebenenfalls, durch Zusatz einer Base die sauren Gruppen neutralisiert, danach b Gewichtsteile eines Vinylacylamins der Formel IVa

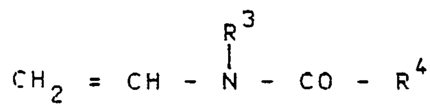

(IVa)

worin $R^3$ und $R^4$ gleich oder verschieden sind und unabhängig voneinander Wasserstoff, Methyl oder Ethyl oder gemeinsam Trimethylen oder Pentamethylen bedeuten und die Werte für a und b so gewählt werden, daß die Summe $(a + b) = 0$ bis 30 beträgt, und 5 bis 90 Gewichtsteile Acrylamid und/oder Methacrylamid zufügt und die Copolymerisation einleitet und bei 10 bis 120°C durchführt.

6. Verfahren gemäß Anspruch 5, dadurch gekennzeichnet, daß zur Herstellung von je 100 Gewichtsteilen des Copolymerisats 1 - 10 Gewichtsteile des Vinylphosphonsäureesters der Formel Ia, 10 - 70 Gewichtsteile der ungesättigten Sulfonsäure der Formel IIa, 29 - 80 Gew.-Teile Acrylamid und/oder Methacrylamid und 0 - 20 Gew.-Teile des Vinylacylamins der Formel IVa und/oder Vinylphosphonsärure und/oder Acryl- und(oder Methacrylsäure eingesetzt werden.

7. Verfahren gemäß den Ansprüchen 5 und 6, dadurch gekennzeichnet, daß die wäßrige Monomerenlösung vor der Polymerisation in einem mit Wasser nicht mischbaren organischen Lösungsmittel emulgiert wird.

8. Verwendung der wasserlöslichen Copolymerisate des Anspruchs 1 als Hilfsmittel in der Textilfärberei.

9. Verwendung von wasserlöslichen Copolymerisaten des Anspruchs 1 mit einem mittleren Molekulargewicht von < 50000 als Nachgerbstoff.

10. Verwendung von wasserlöslichen Copolymerisaten des Anspruchs 1 als Verdicker für wäßrige Säuren.

**Claims**

1. Water-soluble copolymers containing, in a statistical distribution, 1 - 86 % by weight of radicals of the formula I

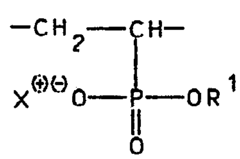

(I)

9 - 80 % by weight of radicals of the formula II

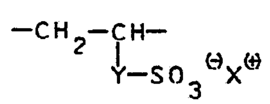

(II)

5 - 90 % by weight of radicals of the formula III

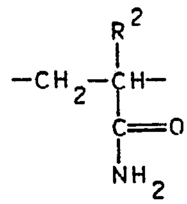

(III)

and, if appropriate, 0 to a total of 30 % by weight of radicals of the formulae

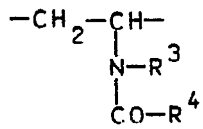

(IV)

and/or

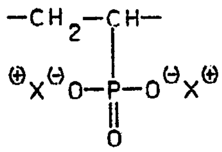

(V)

and/or

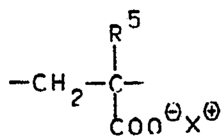

(VI)

wherein in the formulae I to VI $R^1$ denotes alkyl having 1 to 4 C atoms, $R^2$ and $R^5$ independently of one another, denote hydrogen or methyl, $R^3$ and $R^4$ independently of one another, denote hydrogen, methyl or ethyl or together denote trimethylene or pentamethylene and Y represents a direct bond, phenylene or a group of the formula

$-CO-NH-C(CH_3)_2-CH_2-$ and $X^{\oplus}$ represents a proton ($H^{\oplus}$) or a cation.

2. Water-soluble copolymers according to Claim 1, characterised in that they consist of a statistical distribution of 1 - 10 % by weight of radicals of the formula I, 10 - 70 % by weight of radicals of the formula II, 29 - 80 % by weight of radicals of the formula III and 0 - 20 % by weight of radicals of the formulae IV, V and/or VI.

3. Water-soluble copolymers according to Claims 1 and 2, characterised in that, in the radicals of the formula II present therein, Y is a bridge member of the formula

$-CO-NH-C(CH_3)_2-CH_2-$.

4. Water-soluble copolymers according to Claims 1 to 3, characterised in that $X^{\oplus}$ is an alkaline earth metal or an alkali metal cation, an ammonium ion or a cation derived from lower primary, secondary or tertiary aliphatic amines, the alkyl groups of which have 1 to 4 C atoms and may be optionally substituted by -OH groups.

5. Process for the preparation of water-soluble copolymers of the composition indicated in Claim 1, characterised in that, for the preparation of each 100 parts by weight of the copolymer, 1 - 86 % by weight of an ester of the formula Ia

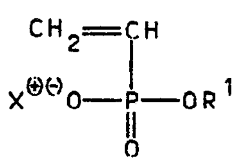

(Ia)

9 - 80 parts by weight of an olefinically unsaturated sulphonic acid of the formula IIa

$$CH_2 = CH - Y - SO_3H \quad \text{(IIa)}$$

and, if appropriate, a parts by weight of methacrylic acid and/or acrylic acid and/or vinylphosphonic acid are

dissolved in water or in a water/alkanol mixture, in which the finished copolymer is also still soluble, or in a water-miscible organic solvent, the acid groups are neutralised by adding a base, of necessity in the event that $R^3$ and $R^4$ do not together denote trimethylene or pentamethylene, or optionally in the event that $R^3$ and $R^4$ together denote trimethylene or pentamethylene, b parts by weight of a vinylacylamine of the formula IVa

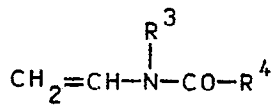

(IVa)

wherein $R^3$ and $R^4$ are identical or different and indepentently of one another denote hydrogen, methyl or ethyl or together denote trimethylene or pentamethylene, and a and b are chosen such that the sum of (a + b) = 0 to 30, and 5 to 90 parts by weight of acrylamide and/or methacrylamide are then added, and the copolymerisation is initiated, and carried out at 10 to 120°C.

6. Process according to Claim 5, characterised in that, for the preparation of each 100 parts by weight of the copolymer, 1 - 10 parts by weight of vinylphosphonic acid ester of the formula Ia, 10 - 70 parts by weight of the unsaturated sulphonic acid of the formula IIa, 29 - 80 parts by weight of acrylamide and/or methacrylamide adn 0 - 20 parts by weight of the vinylacylamine of the formula IVa and/or vinylphosphonic acid and/or acrylic acid and/or methacrylic acid are employed.

7. Process according to Claims 5 and 6, characterised in that the aqueous monomer solution is emulsified prior to the polymerisation in a water-immiscible organic solvent.

8. The use of the water-soluble copolymers of Claim 1 as auxiliaries in textile dyeing.

9. The use of water-soluble copolymers of Claim 1 having an average molecular weight of < 50,000 as a retanning substance.

10. The use of the water-soluble copolymers of Claim 1 as thickeners for aqueous acids.

## Revendications

1. Copolymères hydrosolubles qui contiennent, en répartition statistique

1 à 86 % en poids de restes de formule I

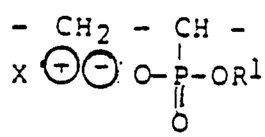

(I)

9 à 80 % en poids de restes de formule II

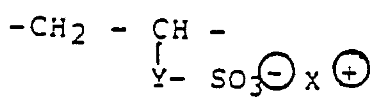

(II)

5 à 90 % en poids de restes de formule III

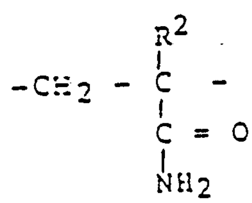

(III)

ainsi que, éventuellement,

0 à 30 % en poids au total de restes répondant aux formules

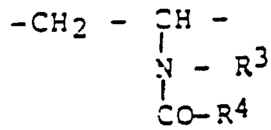 (IV) et/ou

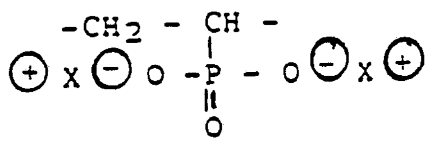 (V) et/ou

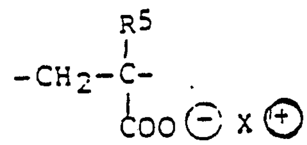 (VI)

et, dans les formules I à VI,

$R^1$ représente un radical alkyle ayant 1 à 4 atomes de carbone,

$R^2$ et $R^5$ représentent, indépendamment l'un de l'autre, un atome d'hydrogène ou un groupe méthyle,

$R^3$ et $R^4$ représentent, indépendamment l'un de l'autre, un atome d'hydrogène, ou un groupe méthyle ou éthyle, ou bien ils signifient ensemble un groupe triméthylène ou pentaméthylène, et

Y représente une liaison directe, un groupe phénylène ou un groupe de formule

$-CO-NH-C(CH_3)_2-CH_2-$ et

$X^{\oplus}$ représente le proton ($H+$) ou un cation.

2. Copolymères hydrosolubles selon la revendication 1, caractérisés en ce qu'ils consistent, en répartion statistique, pour 1 à 10 % en poids de restes de formule I,

pour 10 à 70 % en poids de restes de formule II,

pour 29 à 80 % en poids de restes de formule III, et,

pour 0 à 20 % en poids de restes de formules IV, V et/ou VI.

3. Copolymères hydrosolubles selon les revendications 1 et 2, caractérisés en ce que, dans les restes de formule II qui y sont contenus, Y représente un chaînon de pontage de formule

$-CO-NH-C(CH_3)_2-CH_2$

4. Copolymères hydrosolubles selon les revendications 1 à 3, caractérisés en ce que $X^+$ représente un cation alcalino-terreux ou alcalin, un cation ammonium ou un cation dérivant d'amines aliphatiques inférieures primaires, secondaires ou tertiaires dont les groupes alkyles comportent 1 à 4 atomes de carbone, et peuvent éventuellement être substitués par des groupes OH.

5. Procédé pour préparer des copolymères hydrosolubles ayant la composition indiquée à la revendication 1, caractérisé en ce que, pour préparer 100 parties en poids du copolymère, on dissout 1 à 86 parties en poids d'un ester de formule Ia

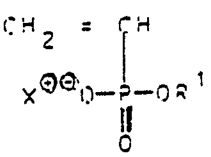 (Ia)

9 à 80 parties en poids d'un acide sulfonique à insaturation oléfinique, de formule IIa

$$CH_2 = CH - Y - SO_3H \qquad \text{(IIa)}$$

éventuellement a parties en poids de l'acide méthacrylique et/ou de l'acide acrylique et/ou de l'acide vinylphosphonique, dans de l'eau ou dans un mélange eau/alcool dans lequel le copolymère terminé est encore soluble, ou dans un solvant organique miscible à l'eau, obligatoirement si $R^3$ et $R^4$ ne représentent pas simultanément un groupe trimethylène ou pentaméthylène et éventuellement si $R^3$ et $R^4$ représentent ensemble un groupe triméthylène ou pentaméthylène, on neutralise par addition d'une base les groupes acides, puis l'on introduit b parties en poids d'une vinylacylamine de formule IVa

$$CH_2 = CH - \underset{\underset{}{}}{\overset{\overset{\displaystyle R^3}{|}}{N}} - CO - R^4 \qquad (IVa)$$

(dans laquelle $R^3$ et $R^4$ sont identiques ou différents et représentent, indépendamment l'un de l'autre, un atome d'hydrogène ou un groupe méthyle ou éthyle, ou, ensemble, un groupe triméthylène ou pentaméthylène), et les valeurs de a et b sont choisies de manière que la somme (a + b) vale 0 à 30, et 5 à 90 parties en poids d'acrylamide et/ou de méthacrylamide, et l'on fait démarrer la copolymérisation que l'on conduit entre 10 et 120°C.

6. Procédé selon la revendication 5, caractérisé en ce que, pour préparer 100 parties en poids du copolymère, on utilise 1 à 10 parties en poids de l'ester d'acide vinylphosphonique de formule Ia, 10 à 70 parties en poids de l'acide sulfonique insaturé de formule IIa 29 à 80 parties en poids d'acrylamide et/ou de méthacrylamide et 0 à 20 parties en poids de la vinylacylamine de formule IVa et/ou de l'acide vinylphosphonique et/ou de l'acide acrylique et/ou méthacrylique.

7. Procédé selon les revendications 5 et 6, caractérisé en ce qu'on émulsionne la solution aqueuse des monomères avant la polymérisation, dans un solvant organique non miscible à l'eau.

8. Utilisation du copolymère hydrosoluble de la revendication 1, comme adjuvant pour la teinture des textiles.

9. Utilisation des copolymères hydrosolubles de la revendication 1, ayant un poids moléculaire moyen inférieur à 50 000, comme agents de retannage.

10. Utilisation des copolymères hydrosolubles de la revendication 1, comme épaississants d'acides aqueux.